# EUROPEAN PATENT SPECIFICATION

(11) **EP 0 414 602 B1**
(45) Date of publication and mention of the grant of the patent: **29.11.1995**
(21) Application number: 90402317.3
(22) Date of filing: 20.08.1990
(51) Int. Cl.: D21B 1/34, D21B 1/32

(54) **Method and apparatus for removing impurities from paper pulp in pulpers**
Verfahren und Vorrichtung zur Trennung von Unreinheiten aus Papierbrei in einer Breimaschine
Procédé et dispositif pour la séparation d'impuretés d'une pâte à papier dans des pulpeurs

(30) Priority: 21.08.1989 FI 893913
(43) Date of publication of application: 27.02.1991
(73) Proprietor: VALMET PAPER MACHINERY INC., 00620 Helsinki (FI)
(72) Inventor: Vuorinen, Timo, SF-33300 Tampere (FI)
(74) Representative: Joly, Jean-Jacques

(56) References cited:
- EP-A- 0 279 022
- DE-A- 3 639 200
- GB-A- 2 128 498

## Description

The invention relates to a method for removing impurities from paper pulp in pulpers where the pulping space into which the paper pulp to be purified is conducted is provided with a rotor unit or the like and a screenplate connecting therewith.

Prior art methods and apparatuses are described for instance in publications FI-74496 (equivalent to GB-A-2 128 498), DE-3 639 200 and EP-279 022. The methods and apparatuses presented in these publications contain a separate wash space which connects with the pulping space and is relatively small in volume compared to that of the pulping space. For instance, the apparatus according to FI-74496 or GB-A-2 128 498 is operated and constructed as set forth in the preambles of claims 1 and 4 respectively. Therefore, the methods and apparatuses presented need separate attachments to be connected to the actual pulping space. Handling of the rejected portion is particularly difficult. Application of the methods requires a substantial amount of wash water. The capacity of said methods is low and some of them involve batch operation.

The object of this invention is to provide a method by which it is possible to remove impurities from paper pulp - especially the light impurities - in the most efficient way and without interfering with the pulping process, while keeping fiber losses low, so that the extraction efficiency of the impurities remains high.

In order to attain these objects, the invention provides a method of removing impurities from paper pulp in pulpers comprising : dividing the pulping space, whereto the paper pulp to be purified is conducted, into a primary and a secondary space; providing both the primary and the secondary spaces with a separate rotor unit or the like, a separate perforated screenplate or the like cooperating with said rotor unit, a separate accepted material outlet and a separate rejected material outlet; introducing the paper pulp to be purified into the primary space; and arranging a connection between the primary and secondary spaces, characterized in that it further comprises enclosing the pulping space with a solid jacket having a lower portion and vertical side portions such that the division between said primary and secondary spaces is effected by means of a vertically-extending partition wall construction, and in that said connection between the primary and secondary spaces is provided within the partition wall construction.

The benefits attainable by the method according to the invention are:
- the method can be applied in connection with either a completely new pulper construction or one already in operation, the method in the latter case having no adverse effect on the pulping time;
- the method can be implemented on a high capacity pulper and whose volume can be dimensioned according to the needs of purification;
- the pulper implementing the method can be designed to be configured so that it efficiently prevents the large heavy impurities from entering the screenplate in the secondary space, and efficiently collects the light impurities;
- by using the pulper implementing the method the bale submerging efficiency is increased;
- pulping efficiency is increased since two rotor units are provided in the pulping space whereby the power consumption per unit mass of paper pulp to be screened is decreased relative to known solutions;
- the pulper applying the method can be easily configured and designed so that the outgoing accepted pulp portions can be jointly conducted forward to the following processing stage, so obviating the need for recycling (which decreases the capacity);
- since the total area of the screening surfaces or the like can be made large, it is possible to use a smaller hole size and thereby achieve a purer paper pulp to be conducted forward for the next processing stage;
- expensive and large automatic valves are not needed in the method, making the process control cheaper and simpler;
- removal of the accepted pulp portions from the secondary space can be effected either periodically or continuously e.g. by means of a screw conveyor;
- in the method, the outlet consistency of the rejected portion removed from the secondary space can exceed 20% so that the subsequent processing of the rejected portion or removal from the pulping process (for instance for use in ballasting or in combustion) can be achieved e.g. by means of belt conveyors. In this respect, it is possible to wash the rejected portion at the screw conveyor, allowing complete collection of fibers using small amounts of water. Also, the accepted portion filtered in the screw conveyor can be conducted to the main pump and forward along the process line;
- application of the method does not disturb the automation of the rotor unit functioning as the actual pulper in the primary space and does not produce any major consistency variations for the main pump;
- application of the method, and in particular the design, allows conduction of a major part of the paper pulp through the secondary space, if necessary;
- when the method is applied, impurities will be conducted into the secondary space, thus making it unnecessary to stop the rotor unit for cleaning the screenplate in the primary space, which functions as the actual pulping space.

Other beneficial characteristics according to the method of the invention are set forth in the ensuing sub-claims.

The invention also relates to an apparatus for application of the method, as defined in claim 4.

The invention is explained in more detail in the following description referring to the embodiment of the enclosed drawings in which:
figures 1 and 2 show a vertical cross-section of a pulper applying the method according to the invention;
figure 3 shows the pulper of figures 1 and 2 in a horizontal cross-section, seen from above.

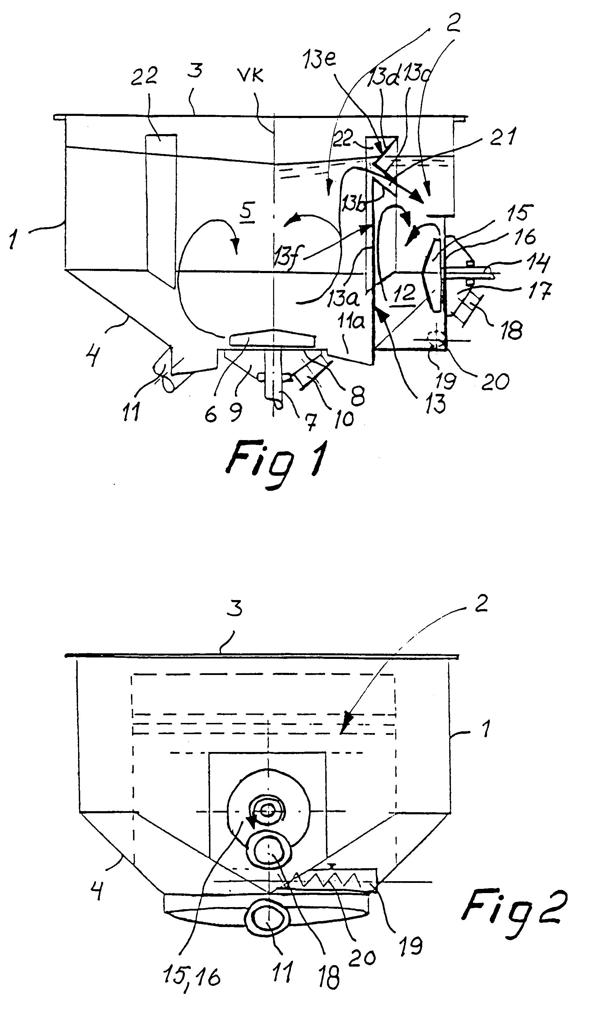

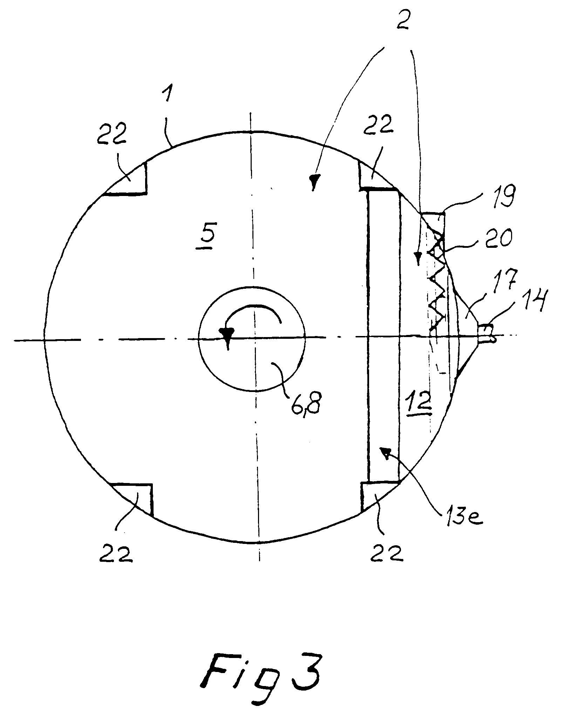

The application of figures 1-3 comprises a pulping space 2 enclosed by a solid jacket 1. As seen particularly in figure 3, the jacket 1 of the pulping space 2 is essentially circular in its horizontal cross-section. Furthermore, the vertically disposed cylindrical jacket 1 contains an upper end portion 3 on the one hand and on the other hand a lower end portion 4, which essentially restricts the pulping space 2 in the horizontal direction.

The paper pulp to be purified is introduced into the pulping space 2 from the side of the upper end portion 3 (not shown) into the primary space 5 accommodating a horizontally rotating rotor unit 6 in connection with the lower end portion 4. The rotor unit 6 has a vertical drive shaft 7, that is parallel to the center line VK of the jacket and is arranged to rotate around said center line VK, passing through the lower end portion 4. Under the rotor unit 6 there is provided a perforated horizontal screenplate 8 through which there is a connection from the primary space 5 into the accepted material outlet chamber 9 below the rotor unit 6 and the screenplate 8, the outlet chamber 9 having an accepted material outlet connection 10. Furthermore, in connection with the lower end portion 4 there is provided an essentially annular groove 11a surrounding the rotor unit having at its lowest portion the rejected material outlet connection 11.

The pulping space 2 is also provided with a secondary space 12 by means of a vertical partition wall construction 13 dividing the pulping space 2. The secondary space 12 accomodates a corresponding rotor unit 15 arranged to rotate in a vertical plane round a horizontal shaft 14. In the proximity of the rotor unit 15, the jacket 1 has a perforated vertical screenplate 16 through which there is provided a connection from the secondary space 12 via the rotor unit 15 into the outlet chamber 17 for the accepted portion of the secondary space 12, the outlet chamber 17 having an accepted material outlet connection 18. There is also a rejected material outlet connection 19 in the lower part of the secondary space 12. There is also provided a screw conveyor 20 or the like mounted in contact with the outlet connection 19 of the secondary space 12 for removing the rejected portion from the secondary space.

As can be noted in figures 1-3, the primary space 5 is larger in volume than the secondary space 12, this being due to the disposition of the partition wall construction 13. In the horizontal cross-section, the partition wall construction divides the upper cross-section of pulping space 2 (fig. 3) into two segments, the larger one constituting the primary space 5 and the smaller one the secondary space 12.

The partition wall construction 13 can be a plate structure attached by its vertical sides to the inner walls of the pulping space 2. The plate structure can be partly or wholly perforated whereby there will be flow of the paper pulp to be purified through the perforations from the primary space 5 into the secondary space 12. Furthermore, the upper part of the partition wall construction 13 in proximity to the surface of the paper pulp may have a directing flow channel 21 extending essentially horizontally and downwards to the secondary space as illustrated particularly in figure 1. This channel is particularly intended to conduct the lighter impurities into the secondary space 12. The flow channel 21 is formed by means of two plates: a plate 13b disposed on the upper edge of the vertical plate 13a of the lower part 13f of the partition wall construction 13 and directed obliquely downwards from said upper edge towards the secondary space 12, and the lower guide plate 13c of the upper part 13e of the partition wall structure 13, disposed over said plate 13b and being situated at a distance therefrom. The lower guide plate 13c, which is essentially parallel with the plate 13b in the vertical cross-section (figure 1), is joined within its horizontal edge facing the primary space 5 to the plate 13d, being directed obliquely upwards away from the primary space 5. Plate 13d thus forms the upper part 13e of the partition wall structure 13 together with plate 13c. The upper edge of the partition wall construction 13 therefore is located below the inner surface of the upper end portion 3 at a distance therefrom.

As can be noted particularly in figures 1 and 3, the inner surfaces of the jacket 1 in the pulping space 2 are equipped with essentially vertical flow guide vanes 22 (four of them at a specific distance).

The embodiment of the apparatus shown in figures 1-3 functions in the following way: paper pulp is supplied e.g. in bales into the primary space 5 where the bales are broken down and simultaneously mixed with water, which is supplied into the primary space 5 (not shown). In the primary space 5, a rotary motion created by the rotor unit 6 and the accepted portion moves via the blades of the rotor unit 6 from the screenplate 8 through the perforation into the accepted material outlet chamber 9, and therefrom to the outlet connection 10 which is connected to e.g. a pulp vat whereto the pulp is pumped by means of a pump attached to a pipe in the outlet connection 10. The rejected portion drains away through the outlet connection 11 of the primary space 5 and is treated after the outlet connection by means of high pressure water in order to return any usable fibers in the rejected portion into recycling. The paper pulp going into the secondary space 12 through the partition wall construction 13 is driven into rotary motion by the influence of the rotor unit 15 in the secondary space and, via the blades of the rotor unit 15, the accepted portion goes through the perforation of the screenplate 16 into the accepted material outlet chamber 17 and further into a pipe connected to the accepted material outlet connection 18 wherefrom it is further conducted using said pump into a pulp vat. In the processing of the rejected portion, which has been removed from the bottom of the secondary space by means of a screw conveyor or corresponding, high pressure water is used for separating any usable fibers still in the rejected portion.

## Claims

1. Method of removing impurities from paper pulp in pulpers comprising :
- dividing the pulping space, whereto the paper pulp to be purified is conducted, into a primary and a secondary space (5, 12);
- providing both the primary and the secondary spaces with a separate rotor unit (6, 15) or the like, a separate perforated screenplate (8, 16) or the like cooperating with said rotor unit (6, 15), a separate accepted material outlet (10, 18) and a separate rejected material outlet (11, 19);
- introducing the paper pulp to be purified into the primary space (5); and
- arranging a connection between the primary and secondary spaces (5, 12),
characterized in that it further comprises enclosing the pulping space (2) with a solid jacket (1, 3, 4) having a lower portion (4) and vertical side portions such that the division between said primary and secondary spaces is effected by means of a vertically-extending partition wall construction (13), and in that said connection between the primary and secondary spaces is provided within the partition wall construction (13).

2. Method according to claim 1, characterized in that, in the primary space (5), the rotor unit (6) or the like, the screenplate (8) or the like, a drainage channel (11a) and said outlet (11) for the rejected portion are disposed at the lower end portion (4) of the jacket (1), said lower end portion restricting the pulping space (2) in the horizontal direction, and in that in the secondary space (12) the rotor unit (15) and the screenplate (16) are disposed on the vertical side portion of the jacket (1) and the rejected material outlet (19) is disposed at the lower end portion of the secondary space (12).

3. Method according to claims 1 and 2, characterized in that the connection between the primary and secondary spaces (5, 12) within the vertically-extending partition wall construction (13) is accomplished by making the partition wall (13), or at least a portion of its area, penetrable by paper pulp by means of perforations and/or providing the upper portion of the partition wall construction (13) with means allowing flow from the primary space (5) to the secondary space (12) so that as the surface level of the paper pulp exceeds the height of the partition wall construction (13) there will be flow of paper pulp from the primary space (5) into the secondary space (12).

4. Apparatus for removing impurities from paper pulp, said apparatus comprising :
- a pulping space (2), whereto the paper pulp to be purified is conducted, which is divided into a primary and a secondary space (5, 12);
- respective rotor units (6, 15), screenplates (8, 16) or the like, cooperating with said rotor units (6, 15), accepted material outlets (10, 18) and rejected material outlets (11, 19) provided for each of the primary and the secondary spaces;
- means for introducing the paper pulp to be purified into the primary space (5); and
- connection means for providing connection between the primary and secondary spaces (5, 12);
characterized in that said pulping space (2) is enclosed by a solid jacket (1, 3, 4), having a lower portion (4) and vertical side portions, and is divided into primary and secondary spaces (5, 12) by means of a vertically-extending partition wall construction (13) and in that said connection means are provided within the partition wall construction (13).

5. Apparatus according to claim 4, characterized in that the partition wall construction (13), or at least part of its area, is made penetrable by paper pulp especially, by means of perforations.

6. Apparatus according to claim 4, characterized in that the upper portion of the partition wall construction (13) is provided with a flow connection from the primary space (5) into the secondary space (12).

7. Apparatus according to claim 6, characterized in that the flow connection in the partition wall construction (12) is accomplished by means of a horizontal flow channel (21) or the like, whereby the vertically-extending partition wall construction (13) is divided into two parts (13e, 13f), said flow channel (21) being disposed between them.

8. Apparatus according to claim 4, characterized in that the partition wall (13), viewed along the horizontal cross-section of the jacket (1), is arranged to divide the pulping space (2), into two segments forming said primary and secondary spaces (5, 12), said pulping space being essentially circular in said cross-section.

9. Apparatus according to claim 8, characterized in that the partition wall construction (13) divides the pulping space (2) so that the primary space (5) is larger than the secondary space (12).

## Patentansprüche

1. Verfahren zur Entfernung von Verunreinigungen aus Papierbrei in Papierbreiverarbeitungsvorrichtungen, umfassend folgende Stufen:
- Unterteilen des Papierbreibearbeitungsraums, in den der zu reinigende Papierbrei geleitet wird, in einen primären und einen sekundären Raum (5, 12);
- Versehen des primären und sekundären Raums mit einer getrennten Rotoreinheit (6, 15) oder dergl., einer getrennten perforierten Siebplatte (8, 16) oder dergl., die mit den Rotoreinheiten zusammenwirkt (6, 15), einem getrennten Wertmaterialauslaß (10, 18) und einem getrennten Ausschußmaterialauslaß (11, 19);
- Zuführen des zu reinigenden Papierbreis in den ersten Raum (5); und
- Anordnen einer Verbindung zwischen dem primären und dem sekundären Raum (5, 12),
dadurch gekennzeichnet, daß der Papierbreibearbeitungsraum (2) ferner mit einem festen Mantel (1, 3, 4) mit einem unteren Bereich (4) und vertikalen Seitenbereichen so umschlossen ist, daß die Unterteilung zwischen dem primären und dem sekundären Raum mittels einer sich vertikal erstreckenden Trennwandkonstruktion (13) erfolgt, und daß die Verbindung zwischen dem primären und sekundären Raum innerhalb der Trennwandkonstruktion (13) vorgesehen ist.

2. Verfahren nach Anspruch 1, dadurch gekennzeichnet, daß im primären Raum (5) die Rotoreinheit (6) oder dergl., die Siebplatte (8) oder dergl., ein Ablaufkanal (11a) und der Auslaß (11) für das Ausschußmaterial an einem unteren Endbereich (4) des Mantels (1) angeordnet sind, wobei der untere Endbereich den Papierbreibearbeitungsraum (2) in horizontaler Richtung begrenzt, und daß im sekundären Raum (12) die Rotoreinheit (15) und die Siebplatte (16) an dem vertikalen Seitenbereich des Mantels (1) angeordnet sind und der Ausschußmaterialauslaß (19) am unteren Endbereich des sekundären Raums (12) angeordnet ist.

3. Verfahren nach Anspruch 1 und 2, dadurch gekennzeichnet, daß die Verbindung zwischen dem primären und sekundären Raum (5, 12) innerhalb der sich in vertikaler Richtung erstreckenden Trennwandkonstruktion (13) dadurch erreicht wird, daß die Trennwand (13) oder zumindest ein Teil ihrer Fläche für den Papierbrei mittels Perforationen und/oder dadurch, daß am oberen Bereich der Trennwandkonstruktion (13) Mittel, die ein Fließen vom primären Raum (5) in den sekundären Raum (12) gestatten, vorgesehen sind, durchgängig wird, so daß dann, wenn der Pegel des Papierbreis die Höhe der Trennwandkonstruktion (13) übersteigt, ein Fluß von Papierbrei aus dem primären Raum (5) in den sekundären Raum (12) erfolgt.

4. Vorrichtung zur Entfernung von Verunreinigungen aus Papierbrei, umfassend:
- einen Papierbreibearbeitungsraum (2), in den der zu reinigende Papierbrei geleitet wird, der in einen primären und einen sekundären Raum (5, 12) unterteilt ist;
- entsprechende Rotoreinheiten (6, 15), Siebplatten (8, 16) oder dergl., die mit den Rotoreinheiten (6, 15) zusammenwirken, Wertmaterialauslässe (10, 18) und Ausschußmaterialauslässe (11, 19), die jeweils für den primären und den sekundären Raum vorgesehen sind;
- eine Einrichtung zur Zufuhr des zu reinigenden Papierbreis in den primären Raum (5); und
- eine Verbindungseinrichtung zur Bereitstellung einer Verbindung zwischen dem primären und sekundären Raum (5, 12);
dadurch gekennzeichnet, daß der Papierbreibearbeitungsraum (2) von einem festen Mantel (1, 3, 4) umschlossen ist, der einen unteren Bereich (4) und vertikale Seitenbereiche umfaßt und mittels einer sich in vertikaler Richtung erstreckenden Trennwandkonstruktion (13) in den primären und sekundären Raum (5, 12) unterteilt ist, und daß die Verbindungseinrichtung innerhalb der Trennwandkonstruktion (13) vorgesehen ist.

5. Vorrichtung nach Anspruch 4, dadurch gekennzeichnet, daß die Trennwandkonstruktion (13) oder zumindest ein Teil ihrer Fläche für Papierbrei durchgängig gemacht ist, insbesondere mittels Perforationen.

6. Vorrichtung nach Anspruch 4, dadurch gekennzeichnet, daß der obere Bereich der Trennwandkonstruktion (13) mit einer Fließverbindung aus dem primären Raum (5) in den sekundären Raum (12) versehen ist.

7. Vorrichtung nach Anspruch 6, dadurch gekennzeichnet, daß die Fließverbindung der Trennwandkonstruktion (12) mittels eines horizontalen Fließkanals (21) oder dergl. hergestellt ist, wobei die sich in vertikaler Richtung erstreckende Trennwandkonstruktion (13) in zwei Teile (13e, 13f) unterteilt und der Fließkanal (21) zwischen diesen angeordnet ist.

8. Vorrichtung nach Anspruch 4, dadurch gekennzeichnet, daß die Trennwand (13) bei Betrachtung entlang des horizontalen Querschnitts des Mantels (1) so angeordnet ist, daß sie den Papierbreibearbeitungsraum (2) in zwei Segmente, die den primären und sekundären Raum (5, 12) bilden, unterteilt, wobei der Papierbreibearbeitungsraum in diesem Querschnitt im wesentlichen kreisförmig ist.

9. Vorrichtung nach Anspruch 8, dadurch gekennzeichnet, daß die Trennwandkonstruktion (13) den Papierbreibearbeitungsraum (2) so unterteilt, daß der primäre Raum (5) größer als der sekundäre Raum (12) ist.

## Revendications

1. Procédé de séparation d'impuretés d'une pâte à papier dans des pulpeurs, comportant :
- la division de l'espace de réduction en pâte, où est amenée la pâte à papier devant être purifiée, en un espace principal et un espace secondaire (5, 12);
- le fait de pourvoir les deux espaces principal et secondaire d'une unité de rotor séparée (6, 15) ou équivalent, d'une plaque de criblage perforée séparée (8, 16) ou équivalent qui coopère avec ladite unité de rotor (6, 15), d'une sortie séparée de matière acceptée (10, 18) et d'une sortie séparée de matière rejetée (11, 19);
- l'introduction de la pâte à papier devant être purifiée dans l'espace principal (5); et
- le fait de prévoir une liaison entre les espaces principal et secondaire (5, 12),
caractérisé en ce qu'il comporte en outre le fait d'enfermer l'espace de réduction en pâte (2) avec une enveloppe solide (1, 3, 4) ayant une partie inférieure (4) et des parties latérales verticales de telle sorte que la division entre lesdits espaces principal et secondaire est effectuée au moyen d'une construction à paroi de séparation s'étendant verticalement (13), et en ce que ladite liaison entre les espaces principal et secondaire est prévue à l'intérieur de la construction à paroi de séparation (13).

2. Procédé selon la revendication 1, caractérisé en ce que, dans l'espace principal (5), l'unité de rotor (6) ou équivalent, la plaque de criblage (8) ou équivalent, un canal d'évacuation (11a) et ladite sortie (11) pour la partie rejetée sont disposés au niveau de la partie d'extrémité inférieure (4) de l'enveloppe (1), ladite partie d'extrémité inférieure limitant l'espace de réduction en pâte (2) dans la direction horizontale, et en ce que, dans l'espace secondaire (12), l'unité de rotor (15) et la plaque de criblage (16) sont disposées sur la partie latérale verticale de l'enveloppe (1) et la sortie de matière rejetée (19) est disposé au niveau de la partie d'extrémité inférieure de l'espace secondaire (12).

3. Procédé selon les revendications 1 et 2, caractérisé en ce que la liaison entre les espaces principal et secondaire (5, 12) à l'intérieur de la construction à paroi de séparation s'étendant verticalement (13) est réalisée en rendant à la paroi de séparation (13), ou au moins une partie de sa surface, pénétrable par la pâte à papier au moyen de perforations et/ou en, pourvoyant la partie supérieure de la construction à paroi de séparation (13) de moyens permettant l'écoulement depuis l'espace principal (5) vers l'espace secondaire (12) de telle sorte que, lorsque le niveau de surface de la pâte à papier dépasse la hauteur de la construction à paroi de séparation (13), il y a un écoulement de pâte à papier de l'espace principal (5) dans l'espace secondaire (12).

4. Appareil de séparation d'impuretés dans la pâte à papier, ledit appareil comportant :
- un espace de réduction en pâte (2), où la pâte à papier qui doit être purifiée est conduite, qui est divisé en un espace principal et un espace secondaire (5, 12);
- des unités de rotor (6, 15) respectives, des plaques de criblage (8, 16) ou équivalent qui coopèrent avec lesdites unités de rotor (6, 15), des sorties de matière acceptée (10, 18) et des sorties de matière rejetée (11, 19) prévues pour chacun des espaces principal et secondaire;
- des moyens destinés à introduire la pâte à papier devant être purifiée dans l'espace principal (5); et
- des moyens de liaison destinés à procurer une liaison entre les espaces principal et secondaire (5, 12);
caractérisé en ce que ledit espace de réduction en pâte (2) est enfermé par une enveloppe solide (1, 3, 4), ayant une partie inférieure (4) et des parties latérales verticales, et est divisé en espaces principal et secondaire (5, 12) au moyen d'une construction à paroi de séparation s'étendant verticalement (13) et en ce que lesdits moyens de liaison sont prévus dans la construction à paroi de séparation (13).

5. Appareil selon la revendication 4, caractérisé en ce que la construction à paroi de séparation (13), ou au moins une partie de sa surface, est pénétrable par la pâte à papier, au moyen de perforations.

6. Appareil selon la revendication 4, caractérisé en ce que la partie supérieure de la construction à paroi de séparation (13) est pourvue d'une liaison d'écoulement de l'espace principal (5) dans l'espace secondaire (12).

7. Appareil selon la revendication 6, caractérisé en ce que la liaison d'écoulement dans l'espace secondaire (12) est réalisée au moyen d'un canal d'écoulement horizontal (21) ou équivalent, de sorte que la construction à paroi de séparation s'étendant verticalement (13) est divisée en deux parties (13e, 13f), ledit canal d'écoulement (21) étant disposé entre elles.

8. Appareil selon la revendication 4, caractérisé en ce que la paroi de séparation (13), vue le long de la coupe verticale de l'enveloppe (1), est prévue pour diviser l'espace de réduction en pâte (2) en deux segments formant lesdits espaces principal et secondaire (5, 12), ledit espace de réduction en pâte étant essentiellement de section circulaire.

9. Appareil selon la revendication 8, caractérisé en ce que la construction à paroi de séparation (13) divise l'espace de réduction en pâte (2) de telle sorte que l'espace principal (5) est plus grand que l'espace secondaire (12).
